# EUROPEAN PATENT SPECIFICATION

(11) **EP 3 962 266 B1**
(45) Date of publication and mention of the grant of the patent: **16.10.2024**
(21) Application number: 20802482.8
(22) Date of filing: 28.04.2020
(51) Int. Cl.: A01K 79/00, B65G 53/30, F04F 1/00

(54) **METHOD AND SYSTEM FOR TRANSPORTATION OF ALIVE FISH**
VERFAHREN UND SYSTEM ZUM TRANSPORT VON LEBENDEN FISCHEN
PROCÉDÉ ET SYSTÈME DE TRANSPORT DE POISSONS VIVANTS

(30) Priority: 03.05.2019 NO 20190568
(43) Date of publication of application: 09.03.2022
(73) Proprietor: Maskon AS, 7502 Stjørdal (NO)
(72) Inventor: HAMMEREN, Jon Egil, 7630 ÅSEN (NO); VAAGLAND, Frode, 7530 MERÅKER (NO); ZIMMERMANN, Magnar, 7503 STJØRDAL (NO)
(74) Representative: Curo AS
(86) International application number: PCT/NO2020/050104
(87) International publication number: WO 2020/226505

(56) References cited:
- WO-A1-02/078436
- WO-A1-2017/213511
- JP-B2- S5 540 136
- US-A- 4 490 044
- US-A1- 2017 238 512
- US-A1- 2017 245 480
- US-A1- 2018 310 575

## Description

The present invention is related to a method for transportation of alive fish according to claim 1 and a system for transportation of alive fish according to claim 7.

### Background

In various applications within the fish industry there is a need for transport of fish from one location to another location, such as for vaccination, sorting, slaughtering, from ships to fish reservoirs or similar by the use of pump systems. Examples of such solutions are US2016113298A, US2018310575A, US2017000094A and WO2017213511A1.

In US2016113298A is described a pumping system including a pipe section having a uniform inside diameter, and a production water piping circuit connected to branch pipes on the upstream and downstream ends of the pipe section, forming a loop with the pipe section. The production water circuit comprises a pump and valves for pumping production water into the pipe section through the inlet branch pipe and out through the outlet branch pipe. There is also provided a method for pumping upload water and fish along the pipe section, comprising the steps of drawing production water out of the pipe section through the downstream end of the pipe section, and simultaneously inducing a flow of upload water and fish through the pipe section. The method also includes the step of pumping production water into an upstream end of the pipe section and causing a flow of upload water and fish along the pipe section.

US2018310575A discloses a method and system for moving killed fish in a pipe or pipeline, comprising water and supply of pressurized air or water pressure or both to create zones having different properties in the pipe or pipeline to form a controllable water flow for propulsion of and controlled retention time of fish in the pipe or pipeline.

From US2017000094A is known a segmented fish pump system. The segmented fish pump system includes a series of booster pump segments stacked upon an intake pump segment, forming an enclosed stream throughout, wherein each booster pump segment induces further upward flow, thereby minimizing the pressure and velocity needed for the intake pump of the intake pump segment. As a result, lessening trauma to fragile aquatic life at collection and further providing a nautical environment within the enclosed stream for the aquatic life to be transported, as well as self-propelled to higher elevations.

In WO2017213511A1 is described a method and system for pumping particles in a liquid, in particular living fish in water, where a chamber draws a liquid and particles up from a liquid volume through a closed duct, the chamber being connected to the suction side of an ejector and a pump for formation of a sub-pressure in the chamber. At the same time, gas supplied from the compressor to the liquid column in the chamber contributes further to the acceleration of liquid flow through the chamber. The ejector is driven by a liquid flow from the pump or of gas from the compressor. The closed duct is connected to a non-return valve or check valve, preventing liquid and particles from returning to the liquid volume. Liquid and particles are transferred out of the chamber and through the ejector and then into a closed duct to the receiving unit. The system also comprises an external supply line, which is controlled by means of a valve on the external supply line and a valve on the supply from a chamber. The external supply is used for example for cleaning of the system with pure or clean water, filling of water at start-up and operation of an ejector in cases, when particles may have a tendency to clog an outlet.

From US2017238512A1 is known a method, a device and a fish-farm for controlling the concentration of living organisms in fluid in order to facilitate the handling of the organisms such as grading and counting. Said apparatus comprises a first in-feed channel for a flow of living organism in a fluid, a second in-feed channel for a flow of fluid, a chamber containing a lever for regulating the flow from the first and the second in-feed channel through the chamber, an outlet, and a computer. A sensor is positioned in the first in-feed channel for detecting the density of living organism in the flow, and wherein a computer continuously and automatically regulates the ratio of flow from the first and the second in-feed channel through the chamber and towards the outlet by the lever in response to the density of living organism in the flow determined by the sensor.

However, a common feature of these systems is that they do not provide a fully automatic solution in relation to a processing station or receiving reservoir or storage container receiving the transported alive fish. A further drawback is that they do not provide an even flow of alive fish delivered to the processing station or receiving reservoir or storage container.

It is further a need for a method and system that may provide improved fish welfare in relation to prior art solutions.

There is also a need for a method and system providing improved control in relation to emptying of a fish reservoir or storage in relation to prior art solutions.

### Object

The main object of the present invention is to provide a method and system for transportation of alive fish partly or entirely solving the drawbacks of prior art.

An object of the present invention is to provide a method and system for fully automatic transportation of alive fish.

It is an object of the present invention to provide a method and system for fully automatic transportation of alive fish from a water-filled fish reservoir or storage container to a processing station or receiving reservoir or storage container.

An object of the present invention is to provide a method and system for transportation of alive fish capable of delivering alive fish to the processing station or receiving reservoir or storage container with an even flow of alive fish.

It is an object of the present invention to provide a method and system for transportation of alive fish wherein the even flow of alive fish delivered to the processing station or receiving reservoir or storage container is manipulated by controlled water supply.

An object of the present invention is to provide a method and system for transportation of alive fish wherein the even flow of alive fish is controlled based on a desired amount of alive fish in a downstream flow of a controllable pump.

It is an object of the present invention to provide a method and system for transportation of alive fish wherein the flow of alive fish is adapted the capacity of the processing station or receiving reservoir or storage container.

An object of the present invention is to provide a method and system for transportation of alive fish providing improved fish welfare compared to prior art solutions.

It is an object of the present invention to provide a method and system for transportation of alive fish providing improved control of emptying of a water-filled fish reservoir or storage container compared to prior art solutions.

Further objects of the present invention will appear from the following description, claims and attached drawings.

### The invention

A method for transportation of alive fish according to the present invention is disclosed in claim 1. Preferable features of the method are disclosed in the dependent method claims.

A system for transportation of alive fish according to the present invention is disclosed in claim 7. Preferable features of the system are disclosed in the dependent system claims.

The present invention is related to a method and system for transportation of alive fish in moving water from a water-filled fish reservoir or storage container to a processing station or receiving reservoir or storage container. The present invention is especially related to transportation of alive fish in moving water, from the water-filled fish reservoir or storage container to the processing station or receiving reservoir or storage container by using at least one controllable pump connected to the water-filled fish reservoir or storage container and processing station or receiving reservoir or storage container by hoses or pipelines, and wherein an even flow of alive fish is delivered to the processing station or receiving reservoir or storage container.

The processing station will typically be a vaccination station or sorting station or a combined vaccination station and sorting station.

The use of other reservoir or storage container is herein related to reservoirs or storage containers internally in a fish handling plant or the receiving reservoir or storage container may be arranged on a truck or marine vessel enabling controlled delivery of alive fish from the water-filled fish reservoir or storage container to receiving reservoir or storage container facilitating counting of transported alive fish.

The present invention is related to alive fish in general, i.e. from small sized alive fish, such as smolt, to large sized alive fish.

The method for transportation of alive fish comprises an initial step of adjusting pump velocity of the controllable pump to achieve a desired transport velocity of water flow therethrough and maintaining the desired transport velocity. The transport velocity, i.e. water flow, may be read by using a pressure or flow sensor arranged in association with the controllable pump enabling controlling of the controllable pump.

The method for transportation of alive fish further comprises a step of pumping a flow of water through the controllable pump and to the processing station or receiving reservoir or storage container.

As the method according to the present invention is maintaining the transport/flow velocity of the controllable pump and thus providing a constant water flow downstream the controllable pump at all time, the method comprises, as the water level in the water-filled reservoir or storage tank is reduced and thus the water flow through the controllable pump will be reduced, increasing the pump velocity automatically to maintain the constant transport/flow velocity downstream the controllable pump.

The method according to the present invention comprises the use of an optical sensor system arranged downstream the controllable pump, for detecting/measuring the amount of alive fish in a downstream flow of the controllable pump.

The method according to the present invention further comprises, if the optical sensor system measures/detects that a desired/preset amount of fish has reached the optical sensor system downstream the controllable pump, manipulating the amount of fish in an upstream flow of the controllable pump by supplying a controlled amount of water in the upstream flow of the controllable pump resulting in that a lower amount of fish reaches the controllable pump while the controllable pump maintains the same transport/water flow velocity downstream of the controllable pump.

The amount of alive fish that is measured/detected by the optical sensor system provides a measure for volume of fish in the downstream flow, i.e. does not count the number of fishes in the downstream flow. The desired/preset amount of alive fish measured/detected by the optical sensor system is accordingly set as percentual filling/coverage of fish in the hose or pipeline downstream the controllable pump.

In this way is achieved a method for transporting/pumping alive fish from a fish reservoir or storage container to a processing station or receiving reservoir or storage container such that the alive fish is provided/supplied at even flow/rate to the processing station or receiving reservoir or storage container.

The set-point of the optical sensor system may be controlled automatically from the processing station or receiving reservoir or storage container, or manually by an operator at the processing station or receiving reservoir or storage container. By e.g. using sensor means associated with the processing station or receiving reservoir or storage container, information/measurements from the sensor means may be used for controlling the set-point of the optical sensor system controlling the supply of water in the upstream flow of the controllable pump and providing an even flow/rate of alive fish delivered to the processing station or receiving reservoir or storage container.

According to a further embodiment of the method according to the present invention, it further comprises self-priming of the controllable pump.

Accordingly, the method according to the present invention provides an even flow/rate of alive fish delivered to the processing station or receiving reservoir or storage container at any time, until the water-filled fish reservoir or storage container is emptied.

A system for transport of alive fish in moving water from a water-filled fish reservoir or storage container to a processing station or receiving reservoir or storage container according to the present invention comprises at least one controllable pump, connected at an inlet thereof by means of a hose or pipeline to the water-filled fish reservoir or storage container and connected at an outlet thereof by means of a hose or pipeline to the processing station, such as a sorting station or vaccination station, or receiving reservoir or storage container of a facility, marine vessel or truck.

The system according to the present invention is further provided with a controllable water supply connected to the hose or pipeline upstream the at least one controllable pump via at least one controllable valve.

The system according to the present invention is further downstream the controllable pump provided with an optical sensor system for detecting/measuring amount of alive fish in downstream flow of the at least one controllable pump.

The system according to the present invention is further provided with a control unit provided with means and/or software for controlling the at least one controllable pump and the at least one controllable valve for controlling the supply of water in the upstream flow.

For controlling of the at least one controllable pump, a pressure or flow sensor is arranged in association with the controllable pump to provide information about the pump velocity/transport/water flow velocity.

The control unit is according to the present invention provided with means and/or software for controlling the controllable pump according to the measured pressure or flow in the controllable pump by the pressure or flow sensor to achieve a desired and constant water flow downstream the controllable pump.

The control unit is further according to the present invention provided with means and/or software for controlling the controllable valve of the water supply upstream the controllable pump based on measurements/detections of amount of alive fish in the downstream flow of the controllable pump made by the optical sensor system. The amount of alive fish that is measured/detected by the optical sensor system provides a measure for volume of fish in the downstream flow, i.e. does not count the number of fishes in the downstream flow. The desired/preset amount of alive fish measured/detected by the optical sensor system is accordingly set as percentual filling/coverage of fish in the hose or pipeline downstream the controllable pump.

According to a further embodiment of the system according to the present invention, the processing station or receiving reservoir or storage container is provided with sensor means controlling the set-point of the optical sensor system. By e.g. using sensor means associated with the processing station or receiving reservoir or storage container, information/measurements from the sensor means may be used for automatically controlling the set-point of the optical sensor system resulting in automated control of the supply of water in the upstream flow of the controllable pump.

According to a further embodiment of the system according to the present invention the set-point of the optical sensor system is controlled manually by an operator of the processing station, such as a sorting station or vaccination station, or receiving reservoir or storage container, wherein the manually setting may be used for controlling the set-point of the optical sensor system controlling the supply of water in the upstream flow of the controllable pump.

Accordingly, the system according to the present invention provides an even flow/rate of alive fish delivered to the processing station or receiving reservoir or storage container at any time.

By the present invention is further provided a method and system for transportation of alive fish providing improved fish welfare compared to prior art solutions.

The present invention further provides a method and system for transportation of alive fish providing improved control of emptying of a water-filled fish reservoir or storage container compared to prior art solutions.

Further preferable features and advantageous details of the present invention will appear from the following example description, claims and attached drawings.

### Example

The present invention will below be described in further detail with references to the attached drawings, where:
Figure 1 is a principle drawing of a system according to the present invention, and
Figure 2 is a block diagram of controlling of the system according to the present invention.

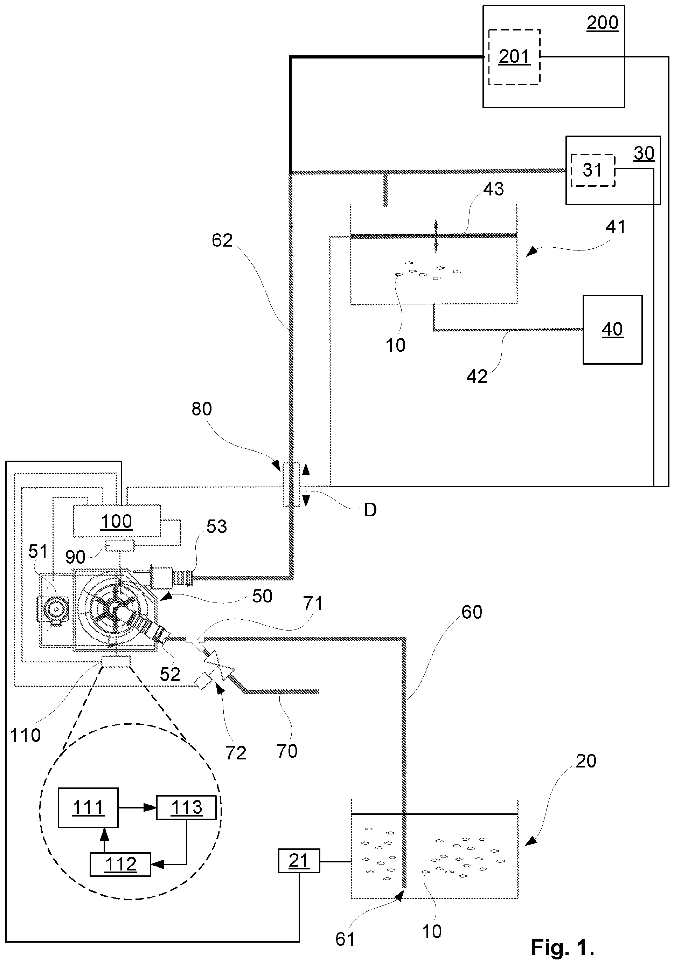

Reference is now made to Figure 1 which is a principle drawing of a system for transport of alive fish 10 in moving water from a water-filled fish reservoir 20 or storage container holding alive fish 10 to be transported to a processing station, such as a sorting station 30 or vaccination station 40, or receiving reservoir or storage container 200, know *per se.*

The system according to the present invention comprises at least one controllable pump 50, such as an impeller pump, centrifugal pump or similar, driven by a controllable electric motor 51. The choice of controllable pump 50 as well as the properties thereof will be related to the required lifting height (difference in height between fish reservoir 20 or storage container and processing station or receiving reservoir or storage container 200), capacity, as well as size of alive fish 10 to be transported.

Accordingly, the at least one pump 50 should be capable of transporting/moving large amounts of a fish stock in a very safe and gentle manner. It is further a requirement that the alive fish 10 remain in moving water during the entire transport from the fish reservoir 20 or storage container to the processing station 30, 40 or receiving reservoir or storage container 200.

The at least one controllable pump 50 should further be arranged for precise controlling allowing accurate adjustments of pump speed and flow rate.

According to a further embodiment of the present invention the at least one controllable pump 50 is provided with an internal or external automatic priming system 110, such that the controllable pump 50 is self-priming. The priming system 110 is preferably arranged to evacuate air from the controllable pump 50 without any external auxiliary devices. The priming system 110 according to the present invention is formed by a buffer tank 111, a controllable priming pump 112 (vacuum pump) and at least one level sensor 113. The controllable priming pump 112 is arranged to the inlet 52 of the controllable pump 50 and will draw water and air from the upstream flow of the controllable pump 50 into the buffer tank 111 that is elevated above the inlet 52 of the controllable pump 50. The level sensor 113 is arranged to read the water level in the buffer tank 111, which e.g. may have volume of 5 liters. Accordingly, the automatic priming system 110 according to the present invention works by that the controllable priming pump 112 creates a suction drawing water and air from the inlet flow of the controllable pump 50 until the buffer tank 111 is filled with water, wherein the filling thereof result in that air present will be aerated through the mentioned priming pump 112. When the at least one level sensor 113 detects that the buffer tank 111 is filled the controllable priming pump 112 is stopped. When the at least one level sensor 113 detects a lower limit for water in the buffer tank 111 the controllable pump 112 is again started and water and air, if present, is again drawn into the buffer tank 111 as described above.

By the automated priming system 110 according to the present invention it ensured that the controllable pump 50 is able to deliver the required water flow downstream of the controllable pump 50. Air in the water flow will result in that the water velocity will drop, and it is thus essential that one is able to remove as much as possible of this air before the water reaches the controllable pump 50.

The present invention is also advantageous over prior art solution by that it results in reduced noise of the overall system as the priming pump 112, due to the use of a buffer tank 111, will only run for short period of times to fill the buffer tank 111. This will also result in lower maintenance costs as the priming pump 112 will extended operating time. As the priming pump 112 does not require constant operation, which is the case with prior art solutions, this will also result in considerable saving of energy, compared to prior art solutions.

Inlet 52 of the at least one controllable pump 50 is connected to the water-filled fish reservoir 20 or storage container upstream of the at least one controllable pump 50 by means of a hose or pipeline 60 extending from the inlet 52 and down into the water-filled fish reservoir 20 or storage container, close to the bottom of the water-filled fish reservoir 20 or storage container. In an alternative embodiment the hose 60 or pipeline is connected to an outlet (not shown) arranged in the bottom or close to the bottom of the water-filled fish reservoir 20 or storage container.

The system according to the present invention further comprises a controllable water supply 70 connected to the hose 60 or pipeline upstream of the inlet 52 via a branch connection 71 arranged to the hose 60 or pipeline. The branch connection 71 is preferably a Y-connection arranged such that water may be supplied in the upstream flow, in a flow direction from the water-filled fish reservoir 20 or storage container towards the controllable pump 50. The water supply 70 is controllable via at least one controllable valve 72 arranged in the water supply 70 in front of/upstream the branch connection 71.

Outlet 53 of the at least one controllable pump 50 is connected to the processing station, such as a sorting station 30 or vaccination station 40, or receiving reservoir or storage container 200, by means of a hose 62 or pipeline downstream the at least one controllable pump 50. It should be mentioned that the processing station may be a combined vaccination and sorting station.

In Figure 1 is shown an example of a vaccination station 40 comprising a buffer reservoir 41 or buffer tank receiving the transported alive fish 10 from the water-filled fish reservoir 20 or storage container in front of the vaccination station 40. The buffer reservoir 41 or buffer tank is further connected to the vaccination station 40 via a hose 42 or pipeline.

In the shown example, there is further arranged sensor means 43, such as a float or sliding bulkhead, in the buffer reservoir 41 or buffer tank which may be used for controlling, which will be described in further detail below.

The sorting station 30 may similarly be provided with sensor means 31, such as an optical sensor system, vision system, fish amount sensor, fish counter sensor or similar, that may be used for controlling, which will be further described below.

The receiving reservoir or storage container 200 may similarly be provided with sensor means 201, such as an optical sensor system, vision system, fish amount sensor, fish counter sensor or similar, that may be used for controlling, which will be further described below.

The system according to the present invention is further provided with an optical sensor system 80, arranged downstream of the at least one controllable pump 50, for measuring/detecting amount of alive fish in the downstream flow of the at least one controllable pump 50 to the processing station 30, 40 or receiving reservoir or storage container 200. The optical sensor system 80, such as a vision system, laser system, light curtain system or similar, known *per se,* is arranged to measure/detect the amount of alive fish in the downstream flow over a desired length D, e.g. from 10 mm and upwards, of the hose 62 or pipeline downstream the at least one pump 50 by means of the optical sensor system 80. The optical sensor system 80 will typically comprise at least one optical sensor and at least one light source, enabling measurement/detection and calculation of amount of alive fish in the downstream flow. The amount of alive fish 10 that is measured/detected by the optical sensor system 80 provides a measure for volume of fish 10 in the downstream flow, i.e. does not count the number of fishes in the downstream flow. The desired/preset amount of alive fish 10 measured/detected by the optical sensor system 80 is accordingly set as percentual filling/coverage of fish 10 in the hose 62 or pipeline downstream the controllable pump 50.

The system according to the present invention further comprises a pressure or flow sensor 90 arranged in association with the controllable pump 50 to detect the pump velocity/transport/water flow velocity of the controllable pump 50.

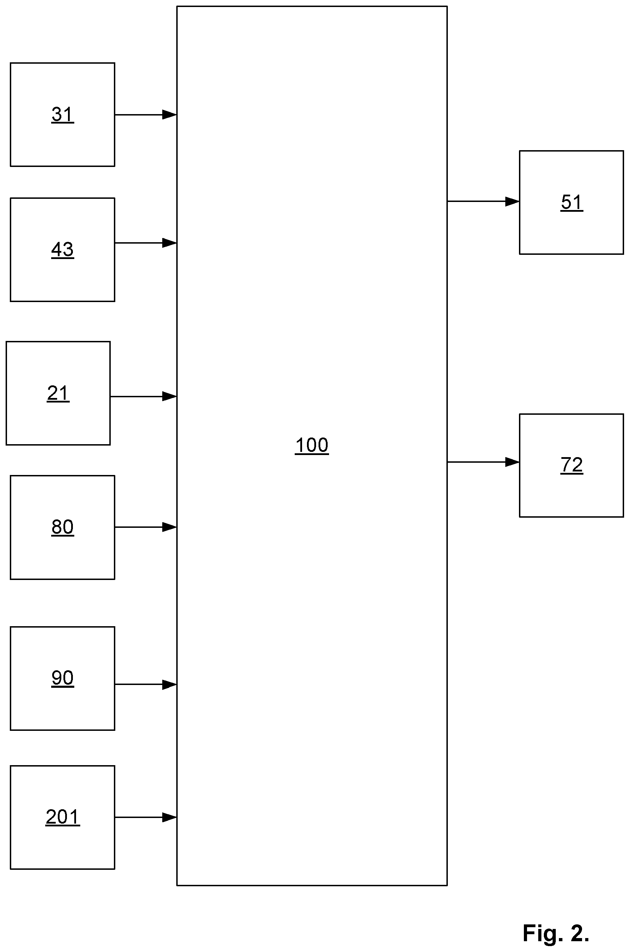

References are now made to Figures 1 and 2 for description of how the system and a method for transportation of alive fish according to the present invention works. In addition to the above described components the system according to the present invention further comprises a control unit 100 provided with means and/or software for controlling the at least one controllable pump 50 by controlling the electric motor 51 and controlling the external water supply 70 by controlling the controllable valve 72.

The controlling of the controllable pump 50 is based on measured water pressure or flow in the controllable pump 50 provided by the pressure or flow sensor 90. By reading the water pressure or flow in the controllable pump 50, the electric motor 51 may be controlled by the control unit 100 to adjust the pump velocity/transport/water flow velocity such that a desired and constant water flow (transport velocity) through the controllable pump 50, i.e. downstream water flow, is achieved and maintained.

Accordingly, by controlling the controllable pump 50 to a desired pump velocity/transport velocity, a suction is created at the inlet 52 and thus in the hose 60 or pipeline connected to the inlet 52 upstream of the controllable pump 50. As an open end 61 of the hose 60 or pipeline upstream the controllable pump 50 is positioned close to the bottom of the water-filled fish reservoir 20 or storage container, the suction results in a flow of water and alive fish from the water-filled fish reservoir 20 or storage container, through the hose 60 or pipeline connected to the inlet 52, through the controllable pump 50, and out of the outlet 53 of the controllable pump 50 and into the hose 62 or pipeline downstream the controllable pump 50 extending to the processing station 30, 40 or receiving reservoir or storage container 200 with a desired transport velocity/water flow velocity.

The optical sensor system 80, as describes above, provides an amount of alive fish 10 transported in the hose 62 or pipeline over the distance D, which is reported to the control unit 100.

The control unit 100 is further provided with means and/or software for comparing the reported amount of fish 10 with one or more predetermined (desired) amounts (percentual filling/coverage) and when this or one of these predetermined amounts of fish is reached, i.e. desirable amount of fish 10 is present in the hose 62 or pipeline downstream the controllable pump 50, the control unit 100 is arranged to control the controllable valve 72 to open for controlled supply of water 70 in upstream flow of the controllable pump 50, thereby manipulating the amount of fish 10 in the upstream flow, resulting in that the controllable pump 50 pumps less amount of fish 10, while the controllable pump 50 maintains the transport/water flow velocity out of the controllable pump 50 and in this way an even flow of alive fish 50 is provided to the processing station 30, 40 or receiving reservoir or storage container 200.

The set-point in the optical sensor system 80 may be set manually by an operator at the processing station 30, 40 or receiving reservoir or storage container 200, or automatically by sensor means 31, 43, 201 of the processing station 30, 40 or receiving reservoir or storage container 200, respectively.

In the shown embodiment where a buffer reservoir 41 or tank is used in front of a vaccination station 40, the buffer reservoir 41 or tank may be provided with sensor means in the form of a float or sliding bulkhead 43, wherein reading or position thereof, controls the set-point, i.e. amount of fish, in the measurement system 80, and thus affecting the controlling of the controllable valve 72 controlling the amount of fish supplied to the buffer reservoir 41 or tank to achieve an even flow of fish 10 delivered thereto.

In the shown embodiment is also shown sensor means 31 and 201, such as an optical sensor system, vision system, fish amount sensor, fish counter sensor or similar, controlling the set-point, i.e. desired amount of fish 10, in the optical sensor system 80, and thus affecting the controlling of the controllable valve 72 controlling the amount of fish 10 supplied to the sorting station 30 or receiving reservoir or storage container 200 to achieve an even flow of fish 10 delivered thereto.

Accordingly, the present invention provides a method and system for fully automatic transportation of alive fish 10 from a fish reservoir 20 or storage container to a processing station 30, 40 or receiving reservoir or storage container 200.

By the present invention is further achieved a method and system providing an even flow of fish 10 delivered to the processing station 30, 40 or receiving reservoir or storage container 200 at any time.

Accordingly, if a desired amount (percentual filling/coverage) of fish 10 of e.g. between 10 % and 20 % of fish 10 in the water flow, is set at the processing station 30, 40 or receiving reservoir or storage container 200, the system according to the present invention will be able to deliver an even flow of fish 10 according to these preferences.

According to a further embodiment of the system according to the present invention there is further arranged a sensor means 21 in association with the water-filled fish reservoir 20 or storage container providing feedback to the control unit 100. The sensor means 21 may e.g. be a pressure sensor or float capable of reading the water level in the water-filled fish reservoir 20 or storage container, wherein the readings/measurements from the sensor means 21 may be used for more rapid controlling of the controllable pump 50, compensating for lower water level in the water-filled fish reservoir 20 or storage container.

The readings/measurements of the sensor means 21 may also be used for alerting/informing an operator that the water-filled fish reservoir 20 or storage container is close to empty or fully emptied.

The readings of the pressure or flow sensor 90 of the controllable pump 50 may also be used for alerting/informing an operator that the water-filled fish reservoir 20 or storage container is close to empty or fully emptied as the pressure sensor or flow sensor 90 then will experience a drop in the water flow through the pump 50.

The control unit 100 may for this be provided with a wireless or wired communication device communicating with an external communication device, such as a display, speaker, tablet, phone, computer, PLS or similar, for alerting/informing the operator about the state of the water-filled fish reservoir 20 or storage container.

According to a further embodiment, several controllable pumps 50 are arranged in series between the water-filled fish reservoir 20 or storage container and the processing station 30, 40 or receiving reservoir or storage container 200 enabling increased lifting height or at use over long transport distances. This requires synchronization of the multiple pumps 50. The control unit 100 described above may be provided with means and/or software for controlling all the pumps 50 or each pump 50 may be provided with a dedicated control unit 100, wherein one of the control units 100 is arranged to provide synchronization. It should be mentioned that the described water supply 70 is only required to the pump closest to the processing station 30, 40 or receiving reservoir or storage container 200, and that the optical sensor system 80 will be arranged between the controllable pump 50 closest to the processing station 30, 40 or receiving reservoir or storage container 200.

If there are several parallel processing stations 30, 40 or receiving reservoirs or storage containers 200, the system may be provided with several controllable pumps 50 arranged in parallel to the same water-filled fish reservoir 20 or storage container. The controlling may then be performed by separate control of the controllable pumps 50 or by synchronization as described above.

The system according to the present invention may be provided with several of the mentioned pumps 50, 113, valves 72, 112 or sensor means 80, 90, 43, 31, 21, 201 for redundancy or increased accuracy of measurements.

The above described embodiments may be combined to form other embodiments within the scope of the attached claims.

## Claims

1. Method for transportation of alive fish (10) in moving water from a water-filled fish reservoir (20) or storage container to a processing station (30, 40) or receiving reservoir or storage container (200) by means of at least one controllable pump (50) connected between the water-filled fish reservoir (20) and processing station (30, 40) or receiving reservoir or storage container (200) by hoses (60, 62) or pipelines, wherein the method comprises adjusting pump (50) velocity of water flow therethrough to a desired transport velocity and maintaining the transport velocity, **characterized in that** the method comprises:
- detecting an amount of alive fish (10) in a downstream flow of the controllable pump (50), and
- if the detected amount of fish (10) in the downstream flow of the controllable pump (50) has reached a set-point for a desired amount of alive fish (10) manipulating the amount of fish (10) in an upstream flow of the controllable pump (50) by supplying a controlled amount of water (70) in the upstream flow of the pump (50) resulting **in that** an even flow of alive fish (10) is delivered to the processing station (30, 40) or receiving reservoir or storage container (200).

2. Method according to claim 1, wherein the method comprises using an optical sensor system (80) for
measuring or detecting the amount of alive fish (10) in the downstream flow of the controllable pump (50).

3. Method according to claim 2, wherein the method comprises using sensor means (31, 43, 201) associated
with the processing station (30, 40) or receiving reservoir or storage container (200) for controlling set-point for desired amount of alive fish (10) in the optical sensor system (80).

4. Method according to claim 2, wherein the method comprises setting set-point for desired amount of alive
fish (10) in the optical sensor system (80) manually by an operator of the processing station (30, 40) or receiving reservoir or storage container (200).

5. Method according to claims 2-4, wherein the method comprises using set-point for desired amount of
alive fish (10) in the optical sensor system (80) for controlling supplied water (70) amount in the upstream flow of the controllable pump (50).

6. Method according to any one of the preceding claims, wherein the method comprises automatic priming of the controllable pump (50).

7. System for transportation of alive fish (10) in moving water from a water-filled fish reservoir (20) or storage container to a processing station (30, 40) or receiving reservoir or storage container (200), wherein the system comprises at least one controllable pump (50), wherein an inlet (52) thereof is connected, by means of a hose (60, 62) or pipeline, to the water-filled fish reservoir (20) or storage container
and an outlet (53) thereof is connected, by means of a hose or pipeline, to the processing station (30, 40) or receiving reservoir or storage container (200), wherein the system comprises a controllable water supply (70) and a control unit (100) provided with means and/or software for controlling transport velocity of water flow through the controllable pump (50), **characterized in that**:
- the system comprises an optical sensor system (80) arranged in a downstream flow of the controllable pump (50) measuring or detecting an amount of alive fish (10) in the downstream flow of the controllable pump (50),
- the controllable water supply (70) is arranged in an upstream flow of the controllable pump (50), and
- the control unit (100) is provided with means and/or software configured to control the water supply (70) in the upstream flow to achieve an even flow of alive fish (10) to the processing station (30, 40) or receiving reservoir or storage container (200) based on the measured or detected amount of alive fish (10) in the downstream flow of the controllable pump (50).

8. System according to claim 7, wherein the water supply (70) comprises at least one controllable valve (72).

9. System according to claim 7, wherein the processing station (30, 40) or receiving reservoir or storage container (200) is provided with sensor means (31, 43, 201) for controlling a set-point for desired amount of alive fish (10) in the optical sensor system (80) or a set-point for desired amount of alive fish (10) in the optical sensor system (80) is arranged to be set manually by an operator of the processing station (30, 40) or receiving reservoir or storage container (200).

10. System according to claim 7, wherein the at least one controllable pump (50) is provided with a pressure or flow sensor (90).

11. System according to claim 8, wherein the control unit (100) is provided with means and/or software for controlling amount of supplied water (70) in the upstream flow of the controllable pump (50) by controlling the valve (72) based on set-point for desired amount of alive fish (10) in the optical sensor system (80).

12. System according to any preceding claims 7-11, wherein the processing station is a sorting station (30), vaccination station (40) or a combination of these.

13. System according to claim 9, wherein the sensor means (43) is a float or sliding bulkhead arranged in a buffer reservoir (41).

14. System according to claim 9, wherein the sensor means (31, 201) is an optical sensor system, vision system, fish amount sensor or fish counter sensor.

15. System according to claim 7, wherein the controllable pump (50) is provided with an automatic self-priming system (110).

## Patentansprüche

1. Verfahren zum Transport von lebendem Fisch (10) in fließendem Wasser von einem mit Wasser gefüllten Fischreservoir (20) oder Speichertank zu einer Verarbeitungsstation (30, 40) oder einem Empfangsreservoir oder Speicherbehälter (200) mittels mindestens einer steuerbaren Pumpe (50), die zwischen dem mit Wasser gefüllten Fischreservoir (20) und der Verarbeitungsstation (30, 40) oder Empfangsreservoir oder Speichertank (200) durch Schläuche (60, 62) oder Rohrleitungen verbunden ist, wobei das Verfahren das Einstellen der Geschwindigkeit des Wasserdurchflusses durch die Pumpe (50) auf eine gewünschte Transportgeschwindigkeit und das Aufrechterhalten der Transportgeschwindigkeit umfasst, **dadurch gekennzeichnet, dass** das Verfahren Folgendes umfasst:
- Erfassen einer Menge an lebenden Fischen (10) in einem stromabwärtigen Fluss der steuerbaren Pumpe (50), und
- wenn die erfasste Menge an Fischen (10) im stromabwärtigen Fluss der steuerbaren Pumpe (50) einen Sollwert für eine gewünschte Menge an lebenden Fischen (10) erreicht hat, Manipulieren der Menge an Fischen (10) in einem stromaufwärts gelegenen Fluss der steuerbaren Pumpe (50) durch Zuführen einer gesteuerten Menge an Wasser (70) in den stromaufwärtigen Fluss der Pumpe (50), was dazu führt, dass ein gleichmäßiger Fluss an lebenden Fischen (10) an die Verarbeitungsstation (30, 40) oder das Empfangsreservoir oder den Speicherbehälter (200) geliefert wird.

2. Verfahren nach Anspruch 1, wobei
das Verfahren die Verwendung eines optischen Sensorsystems (80) zum Messen oder Erfassen der Menge an lebenden Fischen (10) im stromabwärtigen Fluss der steuerbaren Pumpe (50) umfasst.

3. Verfahren nach Anspruch 2, wobei
das Verfahren die Verwendung von Sensormitteln (31, 43, 201) umfasst, die mit der Verarbeitungsstation (30, 40) oder dem Empfangsreservoir oder dem Speicherbehälter (200) verbunden sind, um den Sollwert für die gewünschte Menge an lebendem Fisch (10) in dem optischen Sensorsystem (80) einzustellen.

4. Verfahren nach Anspruch 2, wobei
das Verfahren das manuelle Einstellen eines Sollwerts für die gewünschte Menge an lebendem Fisch (10) in dem optischen Sensorsystem (80) durch einen Bediener der Verarbeitungsstation (30, 40) oder des Empfangsreservoirs oder des Speicherbehälters (200) umfasst.

5. Verfahren nach den Ansprüchen 2 bis 4, wobei
das Verfahren die Verwendung eines Sollwertes für die gewünschte Menge an lebenden Fischen (10) im optischen Sensorsystem (80) zum Steuern der zugeführten Menge an Wasser (70) im stromaufwärtigen Fluss der steuerbaren Pumpe (50) umfasst.

6. Verfahren nach einem der vorstehenden Ansprüche, wobei das Verfahren das automatische Ansaugen der steuerbaren Pumpe (50) umfasst.

7. System zum Transport von lebendem Fisch (10) in fließendem Wasser von einem wassergefüllten Fischreservoir (20) oder Speicherbehälter zu einer Verarbeitungsstation (30, 40) oder einem Empfangsreservoir oder Speicherbehälter (200), wobei das System mindestens eine steuerbare Pumpe (50) umfasst, wobei ein Einlass (52) davon mittels eines Schlauchs (60, 62) oder einer Rohrleitung mit dem wassergefüllten Fischreservoir (20) oder Speicherbehälter verbunden ist und ein Auslass (53) davon mittels eines Schlauchs oder einer Rohrleitung mit der Verarbeitungsstation (30, 40) oder dem Empfangsreservoir oder Speicherbehälter (200) verbunden ist, wobei das System eine steuerbare Wasserzuführung (70) und eine Steuereinheit (100) umfasst, die mit Mitteln und/oder Software zum Steuern der Transportgeschwindigkeit des Wasserflusses durch die steuerbare Pumpe (50) bereitgestellt wird, **dadurch gekennzeichnet, dass:**
- das System ein optisches Sensorsystem (80) umfasst, das in einem stromabwärtigen Fluss der steuerbaren Pumpe (50) angeordnet ist und eine Menge an lebenden Fischen (10) in dem stromabwärtigen Fluss der steuerbaren Pumpe (50) misst oder erfasst,
- die steuerbare Wasserzuführung (70) in einem stromaufwärtigen Fluss der steuerbaren Pumpe (50) angeordnet ist, und
- die Steuereinheit (100) mit Mitteln und/oder Software ausgestattet ist, die so konfiguriert sind, dass sie die Wasserzuführung (70) im stromaufwärtigen Fluss steuern, um einen gleichmäßigen Fluss von lebendem Fisch (10) zur Verarbeitungsstation (30, 40) oder zum Empfangsreservoir oder zum Speicherbehälter (200) zu erreichen, basierend auf der gemessenen oder erfassten Menge an lebendem Fisch (10) im stromabwärtigen Fluss der steuerbaren Pumpe (50).

8. System nach Anspruch 7, wobei die Wasserzuführung (70) mindestens ein steuerbares Ventil (72) umfasst.

9. System nach Anspruch 7, wobei die Verarbeitungsstation (30, 40) oder das Empfangsreservoir oder der Speicherbehälter (200) mit Sensormitteln (31, 43, 201) zum Steuern eines Sollwerts für die gewünschte Menge an lebendem Fisch (10) im optischen Sensorsystem (80) bereitgestellt wird oder ein Sollwert für die gewünschte Menge an lebendem Fisch (10) im optischen Sensorsystem (80) so eingerichtet ist, dass er von einem Bediener der Verarbeitungsstation (30, 40) oder des Empfangsreservoirs oder des Speicherbehälters (200) manuell eingestellt wird.

10. System nach Anspruch 7, wobei die mindestens eine steuerbare Pumpe (50) mit einem Druck- oder Flusssensor (90) versehen ist.

11. System nach Anspruch 8, wobei die Steuereinheit (100) mit Mitteln und/oder Software zum Steuern der Menge des zugeführten Wassers (70) im stromaufwärtigen Fluss der steuerbaren Pumpe (50) durch Steuern des Ventils (72) basierend auf dem Sollwert für die gewünschte Menge an lebenden Fischen (10) im optischen Sensorsystem (80) bereitgestellt wird.

12. System nach einem der vorstehenden Ansprüche 7 bis 11, wobei die Verarbeitungsstation eine Sortierstation (30), eine Impfstation (40) oder eine Kombination aus diesen ist.

13. System nach Anspruch 9, wobei das Sensormittel (43) ein Schwimmer oder ein Gleitschott ist, das in einem Pufferreservoir (41) angeordnet ist.

14. System nach Anspruch 9, wobei die Sensormittel (31, 201) ein optisches Sensorsystem, ein Sichtsystem, ein Fischmengensensor oder ein Fischzählersensor sind.

15. System nach Anspruch 7, wobei die steuerbare Pumpe (50) mit einem automatischen Selbstansaugsystem (110) bereitgestellt ist.

## Revendications

1. Procédé de transport de poissons vivants (10) dans de l'eau en mouvement depuis un réservoir à poissons rempli d'eau (20) ou un conteneur de stockage vers une station de traitement (30, 40) ou un réservoir de réception ou un conteneur de stockage (200) au moyen d'au moins une pompe commandable (50) reliée entre le réservoir à poissons rempli d'eau (20) et la station de traitement (30, 40) ou le réservoir de réception ou le conteneur de stockage (200) par des tuyaux (60, 62) ou des conduites, dans lequel le procédé comprend le réglage de la vitesse de pompe (50) du débit d'eau à travers celle-ci à une vitesse de transport souhaitée et le maintien de la vitesse de transport, **caractérisé en ce que** le procédé comprend :
- la détection d'une quantité de poissons vivants (10) dans un débit en aval de la pompe commandable (50), et
- si la quantité détectée de poissons (10) dans le débit en aval de la pompe commandable (50) a atteint un point de consigne pour une quantité souhaitée de poissons vivants (10), la manipulation de la quantité de poissons (10) dans un débit en amont de la pompe commandable (50) en fournissant une quantité contrôlée d'eau (70) dans le débit en amont de la pompe (50), ce qui a pour résultat qu'un débit régulier de poissons vivants (10) est délivré à la station de traitement (30, 40) ou au réservoir de réception ou au conteneur de stockage (200).

2. Procédé selon la revendication 1, dans lequel le procédé comprend l'utilisation d'un système de capteur optique (80) pour mesurer ou détecter la quantité de poissons vivants (10) dans le débit en aval de la pompe commandable (50).

3. Procédé selon la revendication 2, dans lequel le procédé comprend l'utilisation de moyens de détection (31, 43, 201) associés à la station de traitement (30, 40) ou au réservoir de réception ou au conteneur de stockage (200) pour commander le point de consigne pour la quantité souhaitée de poissons vivants (10) dans le système de détection optique (80).

4. Procédé selon la revendication 2, dans lequel le procédé comprend le réglage du point de consigne pour la quantité souhaitée de poissons vivants (10) dans le système de capteur optique (80) manuellement par un opérateur de la station de traitement (30, 40) ou du réservoir de réception ou du conteneur de stockage (200) .

5. Procédé selon les revendications 2 à 4, dans lequel le procédé comprend l'utilisation du point de consigne pour la quantité souhaitée de poissons vivants (10) dans le système de capteur optique (80) pour commander la quantité d'eau fournie (70) dans le débit en amont de la pompe commandable (50).

6. Procédé selon l'une quelconque des revendications précédentes, dans lequel le procédé comprend l'amorçage automatique de la pompe commandable (50).

7. Système de transport de poissons vivants (10) dans de l'eau en mouvement depuis un réservoir à poissons rempli d'eau (20) ou un conteneur de stockage vers une station de traitement (30, 40) ou un réservoir de réception ou un conteneur de stockage (200), dans lequel le système comprend au moins une pompe commandable (50), dans lequel une entrée (52) est reliée, au moyen d'un tuyau (60, 62) ou d'une conduite, au réservoir à poissons rempli d'eau (20) ou au conteneur de stockage et une sortie (53) est reliée, au moyen d'un tuyau ou d'une conduite, à la station de traitement (30, 40) ou au réservoir de réception ou au conteneur de stockage (200), dans lequel le système comprend une alimentation en eau commandable (70) et une unité de commande (100) dotée de moyens et/ou d'un logiciel pour commander la vitesse de transport du débit d'eau à travers la pompe commandable (50), **caractérisé en ce que** :
- le système comprend un système de capteur optique (80) agencé dans un débit en aval de la pompe commandable (50) mesurant ou détectant une quantité de poissons vivants (10) dans le débit en aval de la pompe commandable (50),
- l'alimentation en eau commandable (70) est agencée dans un débit en amont de la pompe commandable (50), et
- l'unité de commande (100) est dotée de moyens et/ou d'un logiciel configuré pour commander l'alimentation en eau (70) dans le débit en amont pour obtenir un débit uniforme de poissons vivants (10) vers la station de traitement (30, 40) ou le réservoir de réception ou le conteneur de stockage (200) sur la base de la quantité mesurée ou détectée de poissons vivants (10) dans le débit en aval de la pompe commandable (50).

8. Système selon la revendication 7, dans lequel l'alimentation en eau (70) comprend au moins une vanne commandable (72).

9. Système selon la revendication 7, dans lequel la station de traitement (30, 40) ou le réservoir de réception ou le conteneur de stockage (200) est doté de moyens de détection (31, 43, 201) pour commander un point de consigne pour la quantité souhaitée de poissons vivants (10) dans le système de détection optique (80) ou un point de consigne pour la quantité souhaitée de poissons vivants (10) dans le système de détection optique (80) est agencé pour être réglé manuellement par un opérateur de la station de traitement (30, 40) ou du réservoir de réception ou du conteneur de stockage (200).

10. Système selon la revendication 7, dans lequel l'au moins une pompe commandable (50) est dotée d'un capteur de pression ou de débit (90).

11. Système selon la revendication 8, dans lequel l'unité de commande (100) est dotée de moyens et/ou d'un logiciel pour commander la quantité d'eau fournie (70) dans le débit en amont de la pompe commandable (50) en commandant la vanne (72) sur la base d'un point de consigne pour la quantité souhaitée de poissons vivants (10) dans le système de capteur optique (80).

12. Système selon l'une quelconque des revendications précédentes 7 à 11, dans lequel la station de traitement est une station de tri (30), une station de vaccination (40) ou une combinaison de celles-ci.

13. Système selon la revendication 9, dans lequel le moyen de détection (43) est un flotteur ou une cloison coulissante agencé dans un réservoir tampon (41).

14. Système selon la revendication 9, dans lequel le moyen de détection (31, 201) est un système de capteur optique, un système de vision, un capteur de quantité de poissons ou un capteur de compteur de poissons.

15. Système selon la revendication 7, dans lequel la pompe commandable (50) est dotée d'un système d'auto-amorçage automatique (110).
